# EUROPEAN PATENT SPECIFICATION

(11) **EP 4 243 194 B1**
(45) Date of publication and mention of the grant of the patent: **01.10.2025**
(21) Application number: 22899613.8
(22) Date of filing: 18.10.2022
(51) Int. Cl.: H01M 50/581, H01M 50/178, H01M 50/105, H01M 50/129, H01M 50/583, H01M 50/557, H01M 50/126, H01M 50/553, H01M 50/55

(54) **POUCH-SHAPED BATTERY CELL WITH IMPROVED THERMAL STABILITY**
BEUTELFÖRMIGE BATTERIEZELLE MIT VERBESSERTER THERMISCHER STABILITÄT
ÉLÉMENT DE BATTERIE EN FORME DE POCHE À STABILITÉ THERMIQUE AMÉLIORÉE

(30) Priority: 30.11.2021 KR 20210168847
(43) Date of publication of application: 13.09.2023
(73) Proprietor: LG Energy Solution, Ltd., Seoul 07335 (KR)
(72) Inventor: HAN, Hyun Gyu, Daejeon 34122 (KR)
(74) Representative: Plasseraud IP
(86) International application number: PCT/KR2022/015879
(87) International publication number: WO 2023/101211

(56) References cited:
- JP-B2- 4 292 490
- JP-B2- 4 292 490
- JP-B2- 5 958 141
- KR-A- 20030 025 077
- KR-A- 20170 061 490
- KR-B1- 100 822 184
- KR-B1- 102 087 748
- KR-B1- 102 087 748
- US-A1- 2020 127 338

## Description

### [Technical Field]

This application claims the benefit of priority to Korean Patent Application No. 2021-0168847 filed on November 30, 2021.

The present invention relates to a pouch-shaped battery cell with improved thermal safety, and more particularly to a pouch-shaped battery cell with improved thermal safety configured such that, when the temperature in the pouch-shaped battery cell abnormally increases, external short circuit is induced, whereby fire outbreak is inhibited. The subject matter of the present invention is defined in the appended claims.

### [Background Art]

As mobile devices have been continuously developed and the demand for mobile devices has increased, secondary batteries, which are capable of being charged and discharged, have been used as energy sources for various mobile devices. Secondary batteries have also attracted considerable attention as energy sources for electric vehicles and hybrid electric vehicles, which have been presented as alternatives to existing gasoline and diesel vehicles using fossil fuels.

A lithium ion battery, a lithium polymer battery, a nickel cadmium battery, a nickel hydride battery, and a nickel zinc battery are known as secondary batteries. Based on the shape of a battery case, secondary batteries are classified into a cylindrical battery having an electrode assembly mounted in a cylindrical metal can, a prismatic battery having an electrode assembly mounted in a prismatic metal can, and a pouch-shaped battery having an electrode assembly mounted in pouch-shaped case made of an aluminum laminate sheet.

Meanwhile, the operating voltage of a unit battery cell is about 2.5 V to 4.5 V. When output voltage higher than the above operating voltage is required, therefore, a plurality of battery cells may be connected to each other in series to constitute a battery module or a battery pack. Alternatively, a plurality of battery cells may be connected to each other in parallel to constitute a battery module or a battery pack depending on required charge and discharge capacities.

When the plurality of battery cells is connected to each other, however, a problem, such as overload, may occur. For example, there occurs a problem in which the temperature in the battery module or the battery pack increases due to overload, whereby abnormality of a battery is amplified. In order to solve this problem, a heat dissipation sheet or a heat sink is provided in order to maintain the temperature of the battery within a predetermined temperature range.

However, when the temperature of the battery cell abruptly increases with a short time even though a cooling member, such as the heat dissipation sheet or thee heat sink, is provided, it is not possible to secure safety, and therefore countermeasures related thereto are required.

### (Prior Art Document)

(Patent Document 1) Korean Patent Application Publication No. 2018-0082748.

(Patent Document 2) US2020/127338 A1 relates to a secondary battery which includes a case in which a positive electrode lead and a negative electrode lead are provided and comprising a conductive element having one side coming into contact with the positive electrode lead and the other side coming into contact with the negative electrode lead, a safety member disposed at a center of the conductive element to prevent electricity from flowing through the conductive element at a predetermined temperature or less and melted at the predetermined temperature or more to allow the electricity to flow through the conductive element to provide a safety feature.

(Patent Document 3) KR102087748 B1 discloses a pouch-shaped battery cell comprising an electrode assembly having a pair of electrode tabs provided at one side or opposing sides of the electrode assembly; a cell case configured to receive the electrode assembly; a pair of electrode leads, one side of each of the pair of electrode leads being connected to a corresponding one of the electrode tabs, the other side of each of the electrode leads protruding outwards from the cell case and a lead film located between the cell case and each of the electrode leads;

### [Disclosure]

### [Technical Problem]

The present invention has been made in view of the above problems, and it is an object of the present invention to provide a pouch-shaped battery cell with improved thermal safety configured such that, even when the temperature in the battery cell abruptly increases due to charging and discharging or internal or external impact, a possibility of fire outbreak is inhibited, whereby it is possible to prevent secondary damage.

### [Technical Solution]

In order to accomplish the above object, the present invention is directed to a pouch-shaped battery cell is in accordance with claim 1.

In realization modes, the thermal fuse (510) may be located in the cell case (200).

The thermal fuse (510) may be located in the vicinity of each of the electrode tabs (110).

The thermal fuse (510) may be covered with a coating layer (540).

The coating layer (540) may be made of silicone.

The thermal fuse (510) may be located outside the cell case (200).

The thermal fuse (510) may be located on an outer surface of the cell case (200) in tight contact with the cell case.

The thermal fuse (510) may be fixed to an outer surface of a pocket portion of the cell case (200) via an adhesive member (550).

The adhesive member (550) may be made of a thermally conductive material.

The cell case (200) may include an upper case (210), a lower case (220) located under the upper case (210), and a sealed portion (230) formed at edges of the upper case (210) and the lower case (220), and the sealed portion (230) may be formed at three sides or four sides.

### [Advantageous Effects]

As is apparent from the above description, a pouch-shaped battery cell with improved thermal safety according to the present invention has an advantage in that a thermal fuse unit operated only at a predetermined temperature or higher to induce short circuit between a positive electrode and a negative electrode is provided, whereby it is possible to prevent a secondary accident, such as fire outbreak.

In addition, the pouch-shaped battery cell with improved thermal safety according to the present invention has an advantage in that the thermal fuse unit may be provided in a cell case or a terrace portion of the cell case, whereby it is possible to inhibit an increase in volume of the battery cell.

Furthermore, the pouch-shaped battery cell with improved thermal safety according to the present invention has an advantage in that it is possible to induce short circuit due to heat generated in the pouch-shaped battery cell without a separate sensing device, whereby it is possible to rapidly deal with a high-temperature situation.

### [Description of Drawings]

FIG. 1 is a perspective view of a pouch-shaped battery cell according to a first preferred embodiment of the present invention.
FIG. 2 is an exploded perspective view of the pouch-shaped battery cell of FIG. 1 in the state in which an upper case is separated therefrom.
FIG. 3 is a sectional view taken along line A-A' of FIG. 1.
FIG. 4 is a plan view showing a thermal fuse unit according to a first preferred embodiment of the present invention.
FIG. 5 is a conceptual view illustrating a method of connecting one side cable of the thermal fuse unit according to the first preferred embodiment of the present invention to a cell case.
FIG. 6 is a perspective view of a pouch-shaped battery cell according to a second preferred embodiment of the present invention.
FIG. 7 is an exploded perspective view of the pouch-shaped battery cell of FIG. 6 in the state in which an upper case is separated therefrom.
FIG. 8 is a sectional view taken along line A-A' of FIG. 6.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a pouch-shaped battery cell with improved thermal safety according to the present invention will be described with reference to the accompanying drawings.

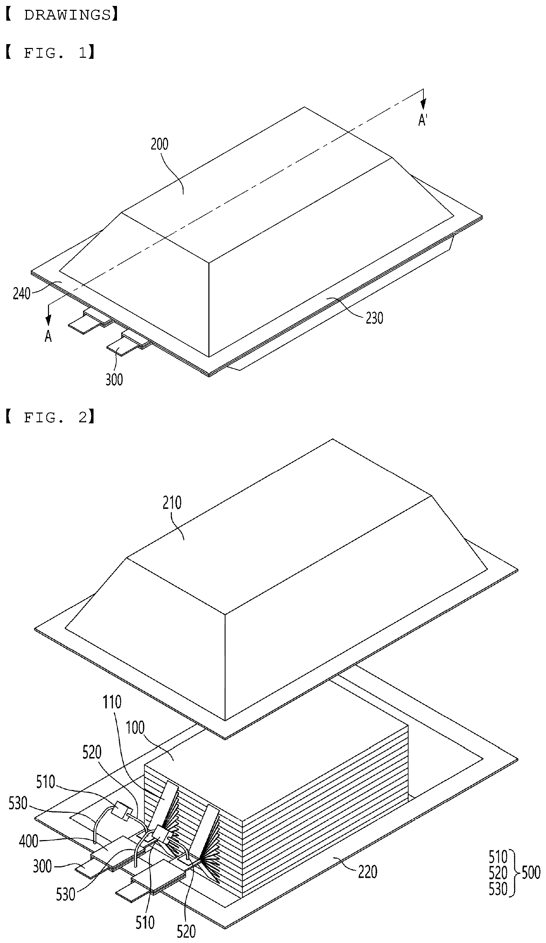

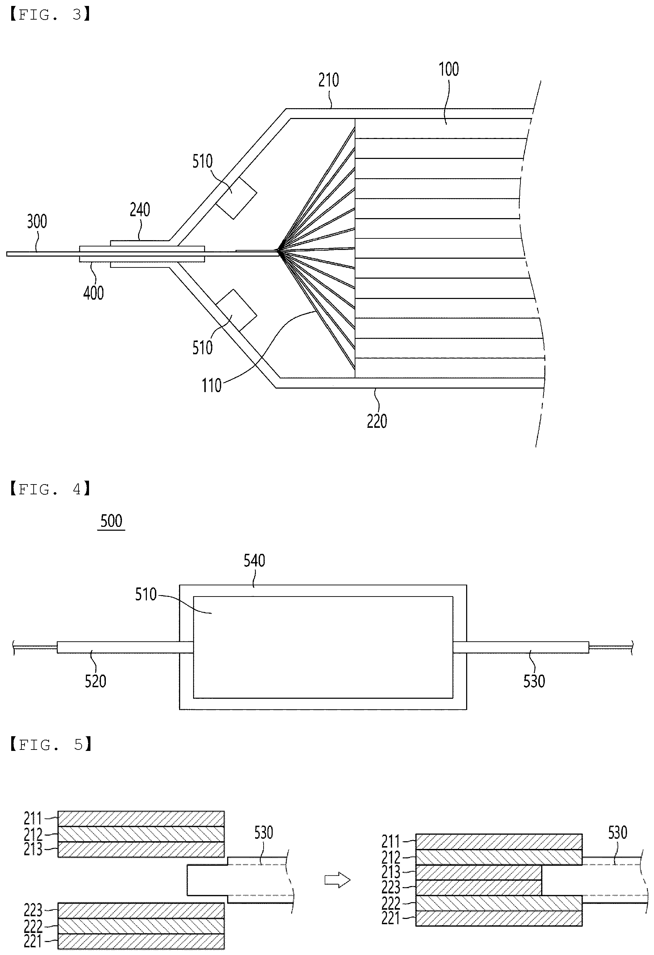

FIG. 1 is a perspective view of a pouch-shaped battery cell according to a first preferred embodiment of the present invention, FIG. 2 is an exploded perspective view of the pouch-shaped battery cell of FIG. 1 in the state in which an upper case is separated therefrom, and FIG. 3 is a sectional view taken along line A-A' of FIG. 1.

As shown in FIGs. 1 to 3, the pouch-shaped battery cell according to the present invention includes an electrode assembly 100, a cell case 200, an electrode lead 300, a lead film 400, and a thermal fuse unit 500.

First, the electrode assembly 100 may be a jelly-roll type cell assembly, which is configured to have a structure in which a long sheet type positive electrode and a long sheet type negative electrode are wound in the state in which a separator is interposed therebetween; a stacked type cell assembly including unit cells, each of which is configured to have a structure in which a rectangular positive electrode and a rectangular negative electrode are stacked in the state in which a separator is interposed therebetween; a stacked and folded type cell assembly, which is configured to have a structure in which unit cells are wound using a long separation film; or a laminated and stacked type cell assembly, which is configured to have a structure in which unit cells are stacked in the state in which a separator is interposed therebetween and are then attached to each other. However, the present invention is not limited thereto.

In addition, a pair of electrode tabs 110 may be provided at one side or opposite sides of the electrode assembly 100, wherein each of the electrode tabs 110 is connected to one side of the electrode lead 300 such that electrical energy generated in the electrode assembly 100 flows to the electrode lead 300.

The cell case 200, which is configured to encompass the electrode assembly 100, includes an upper case 210, a lower case 220, a sealed portion 230, and a terrace portion 240.

The upper case 210 is provided with a pocket portion configured to encompass an upper part of the electrode assembly 100, and is configured so as to have a laminate sheet structure including a first outer resin layer 211, a first metal layer 212, and a first inner resin layer 213 sequentially disposed from the outside.

Here, the first outer resin layer 211 may be made of a heat-resistant polymer that exhibits excellent tensile strength, resistance to moisture permeation, and resistance to air transmission such that the first outer resin layer exhibits high heat resistance and chemical resistance while protecting the electrode assembly 100. As an example, the first outer resin layer may be made of nylon or polyethylene terephthalate; however, the present invention is not limited thereto.

The first metal layer 212, which is disposed so as to abut the first outer resin layer 211, corresponds to a barrier layer configured to prevent moisture or various kinds of gas from permeating into the battery from the outside. An aluminum thin film, which is lightweight and easily shapeable, may be used as a preferred material for the metal layer.

The first inner resin layer 213 is provided on the other surface of the first metal layer 212 and is disposed in direct contact with the electrode assembly 100, and therefore the first inner resin layer must exhibit high insulation properties and high resistance to an electrolytic solution. The first inner resin layer 213 may be made of a material selected from among a polyolefin-based resin, such as polypropylene, polyethylene, polyethylene acrylate, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, may be most preferably used.

The lower case 220, which is located under the upper case 210, is provided with a pocket portion configured to encompass a lower part of the electrode assembly 100, and is configured so as to have a laminate sheet structure including a second outer resin layer 221, a second metal layer 222, and a second inner resin layer 223 disposed in a direction from the outside to the inside.

The second outer resin layer 221, the second metal layer 222, and the second inner resin layer 223 are identical in function and material to the first outer resin layer 211, the first metal layer 212, and the first inner resin layer 213 of the upper case 210, respectively, and a duplicated description thereof will be omitted.

Here, although the pocket portion configured to receive the electrode assembly 100 is shown as being provided at each of the upper case 210 and the lower case 220 in FIGs. 1 and 2, the pocket portion may be provided at only the upper case or the lower case, and the other case may be flat.

In addition, although the upper case and the lower case are shown as being completely separated from each other in the drawings, which is merely an example, one long or short side edge of the upper case and one long or short side edge of the lower case may be connected to each other such that the upper case and the lower case are integrated.

After the electrode assembly 100 is received in the pocket portions of the upper case 210 and the lower case 220, the sealed portion 230 is formed along edges of the upper case 210 and the lower case 220 that abut each other.

That is, the first inner resin layer 213 of the upper case 210 and the second inner resin layer 223 of the lower case 220 at the edges thereof that abut each other are thermally fused, whereby introduction of external air or moisture into the electrode assembly 100 received in the upper and lower cases is blocked.

After the upper case 210 and the lower case 220 are sealed, the remaining sealed portions 230 excluding the side, through which the electrode lead 300 extends, may be bent toward a side surface of the pocket portion. At this time, the sealed portion 230 located at the part from which the electrode lead 300 protrudes is also called a terrace portion 240.

Meanwhile, the electrode lead 300, which is flat, is constituted by a positive electrode lead or a negative electrode lead, and is exposed out of the case after each of the electrode tabs 110 of the electrode assembly 100 is electrically connected thereto.

The lead film 400 is interposed between the cell case 200 and the electrode lead 300 in order to improve insulation and sealing, and is disposed at each of an upper surface and a lower surface of the electrode lead 300 located in the terrace portion 240 of the cell case 200.

FIG. 4 is a plan view showing a thermal fuse unit according to a first preferred embodiment of the present invention. The thermal fuse unit 500 will be described with reference to FIG. 4.

The thermal fuse unit 500 according to the present invention performs no function at ordinary times. When the temperature of the battery cell increases to a predetermined temperature or higher, however, connection of a thermal fuse is performed, whereby short circuit between the positive electrode and the negative electrode occurs, and therefore external short circuit is induced. As a result, a possibility of fire outbreak is inhibited.

Specifically, a pair of thermal fuse units 500, i.e. two thermal fuse units, is provided, and each of the thermal fuse units 500 includes a thermal fuse 510, a first cable 520, a second cable 530, and a coating layer 540.

The thermal fuse 510, to one side of which the first cable 520 is connected and to the other side of which the second cable 530 is connected, is a kind of protection switch configured such that contact points of the thermal fuse are separated from each other at a normal temperature and such that the contact points of the thermal fuse join each other at a predetermined temperature or higher such that current flows in the thermal fuse. The thermal fuse corresponds to known technology, and therefore a detailed description thereof will be omitted.

The thermal fuse 510 may be located in the cell case 200, more specifically in the vicinity of the electrode tab facing the terrace portion 240.

At this time, one of the pair of thermal fuse units 500 is connected to the positive electrode tab and the metal layer of the cell case 200, and the other thermal fuse unit 500 is connected to the negative electrode tab and the metal layer of the cell case 200.

For example, for any one of the thermal fuse units 500, the first cable 520 extending from one side of the thermal fuse 510 by a predetermined length is connected to the positive electrode tab, and the second cable 530 is connected to the metal layer of the cell case. For the other thermal fuse units 500, the first cable 520 is connected to the negative electrode tab, and the second cable 530 is connected to the metal layer of the cell case.

When the temperature in the cell case 200 is a predetermined temperature or lower, therefore, the contact points of the thermal fuse 510 are spaced apart from each other. When the temperature in the cell case 200 increases to the predetermined temperature or higher during a charging and discharging process or due to external impact, however, the contact points join each other. As a result, the positive electrode tab, the metal layer, and the negative electrode tab are electrically connected to each other, whereby short circuit occurs between the positive electrode and the negative electrode.

Of course, in an embodiment not according to the invention, the positive electrode tab and the negative electrode tab may be directly connected to each other using one thermal fuse unit. Since short circuit may occur in an undesired situation, however, according to the invention, it is adopted a pair of thermal fuse units. That is, the temperature of one of the electrode tabs may temporarily increase at the time of rapid charging or output. This operation is normal, and therefore short circuit must not occur.

Meanwhile, the temperature at which the thermal fuse 510 is operated may be 130°C or higher; however, the present invention is not limited thereto in consideration of the fact that ignition temperature due to internal short circuit is 200°C or higher.

In addition, the first cable 520 of each of the thermal fuse units 500 may also be welded so as to be fixed when the electrode tab and the electrode lead are welded.

The coating layer 540, which wraps the thermal fuse 510, is configured to prevent malfunction of the thermal fuse 510 due to an electrolytic solution located in the cell case 200. Here, the material for the coating layer 540 may be silicone, although a material that exhibits resistance to an electrolytic solution is not particularly restricted.

FIG. 5 is a conceptual view illustrating a method of connecting one side cable of the thermal fuse unit according to the first preferred embodiment of the present invention to the cell case.

Referring to FIG. 5, the second cable 530 extending from the thermal fuse 510 according to the present invention is connected to the metal layers of the upper case 210 and the lower case 220.

As previously described, each of the upper case 210 and the lower case 220 has a laminate structure configured such that the outer resin layer, the metal layer, and the inner resin layer are sequentially disposed, and the first inner resin layer 213 of the upper case 210 and the second inner resin layer 223 of the lower case 220 are melted to form a single layer during a sealing process.

A metal wire of the second cable 530, which is coated with an insulative material, is interposed between the upper case 210 and the lower case 220, and the sealing process is performed at a predetermined temperature and pressure. As a result, the wire of the second cable 530 may be located between the first metal layer 212 and the second metal layer 222 in tight contact with each other.

Here, a part of the coating layer may be inserted into the sealed portion 230 such that the wire of the second cable 530 is not exposed to the outside.

Of course, the connection method is not limited to the above method as long as the wire of the second cable 530 and the metal layers can be electrically connected to each other.

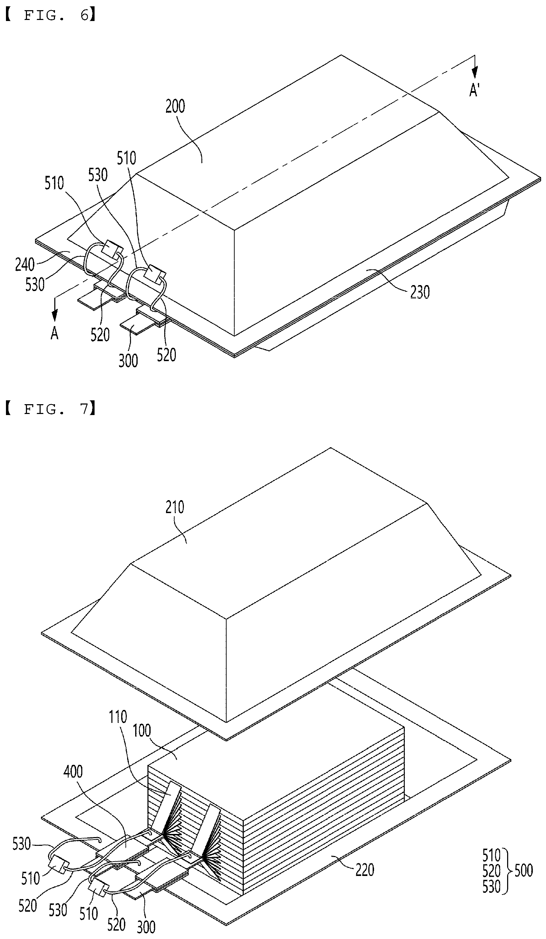

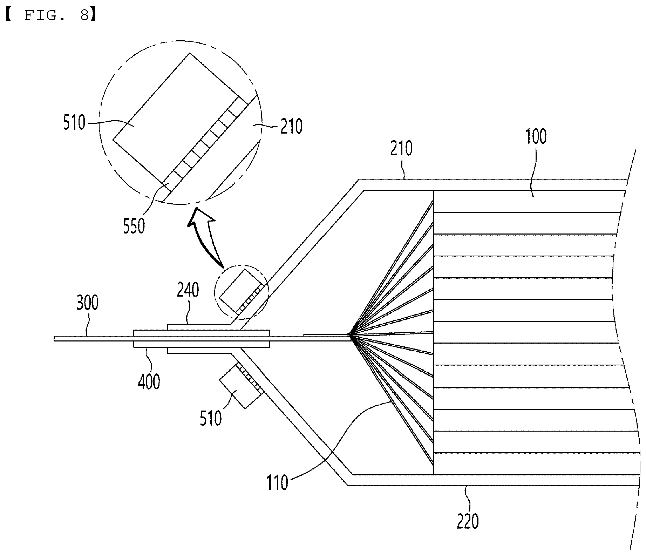

FIG. 6 is a perspective view of a pouch-shaped battery cell according to a second preferred embodiment of the present invention, FIG. 7 is an exploded perspective view of the pouch-shaped battery cell of FIG. 6 in the state in which an upper case is separated therefrom, and FIG. 8 is a sectional view taken along line A-A' of FIG. 6.

Referring to FIGs. 6 to 8, the pouch-shaped battery cell according to the second preferred embodiment of the present invention is identical in construction to the pouch-shaped battery cell according to the first preferred embodiment of the present invention described with reference to FIGs. 1 to 5 except for the position at which the thermal fuse unit 500 is installed, and therefore only difference in construction will be described.

It is preferable for the thermal fuse unit 500 according to the second preferred embodiment of the present invention to be located outside the cell case 200, it is more preferable for the thermal fuse unit to be located in a state of being in tight contact with an outer surface of the cell case 200, and it is most preferable for the thermal fuse unit to be located in the terrace portion 240 in which the electrode tab or the electrode lead, the temperature of which is relatively high, is located.

Here, although a method of fixing the thermal fuse unit 500 to the outer surface of the cell case 200 is not particularly restricted, an adhesive member 550 capable of rapidly transmitting heat in the cell case 200 while exhibiting heat resistance, for example at least one of curable grease and epoxy-based adhesive glue, may be used. However, any material capable of performing the above function may be used without particular restriction.

Those skilled in the art to which the present invention pertains will appreciate that various applications and modifications are possible within the category of the present invention based on the above description, without departing from the scope of the appended claims.

### (Description of Reference Numerals)

100: Electrode assembly
110: Electrode tab
200: Cell case
210: Upper case
211: First outer resin layer 212: First metal layer
213: First inner resin layer
220: Lower case
221: Second outer resin layer 222: Second metal layer
223: Second inner resin layer
230: Sealed portion
240: Terrace portion
300: Electrode lead
400: Lead film
500: Thermal fuse unit
510: Thermal fuse
520: First cable
530: Second cable
540: Coating layer
550: Adhesive member

## Claims

1. A pouch-shaped battery cell comprising:
an electrode assembly (100) having a pair of electrode tabs (110) provided at one side or opposing sides of the electrode assembly (100);
a cell case (200) configured to receive the electrode assembly (100);
a pair of electrode leads (300), one side of each of the pair of electrode leads (300) being connected to a corresponding one of the electrode tabs (110), the other side of each of the electrode leads (300) protruding outwards from the cell case (200);
a lead film (400) located between the cell case (200) and each of the electrode leads (300); and
a thermal fuse unit (500), wherein
at a predetermined temperature or higher, the thermal fuse unit (500) is operated to induce occurrence of a short circuit, **characterized in that** the cell case (200) has a laminate structure comprising an outer resin layer (211, 221), a metal layer (212, 222), and an inner resin layer (213, 223),
the thermal fuse unit (500) includes two thermal fuse units, each of the thermal fuse units (500) comprising a thermal fuse (510) configured to be connected at a predetermined temperature or higher, a first cable extending (520) from one side of the thermal fuse (510) by a predetermined length, and a second cable (530) extending from the other side of the thermal fuse (510) by a predetermined length,
one of the thermal fuse units (500) configured to connect a positive electrode tab and the metal layer (212, 222) of the cell case (200) to each other, and
the other thermal fuse unit (500) configured to connect a negative electrode tab and the metal layer (212, 222) of the cell case to each other.

2. The pouch-shaped battery cell according to claim 1, wherein the thermal fuse (510) is located in the cell case (200).

3. The pouch-shaped battery cell according to claim 2, wherein the thermal fuse (510) is located in the vicinity of each of the electrode tabs (110).

4. The pouch-shaped battery cell according to claim 2, wherein the thermal fuse (510) is covered with a coating layer (540).

5. The pouch-shaped battery cell according to claim 4, wherein the coating layer (540) is made of silicone.

6. The pouch-shaped battery cell according to claim 1, wherein the thermal fuse (510) is located outside the cell case (200).

7. The pouch-shaped battery cell according to claim 6, wherein the thermal fuse (510) is located on an outer surface of the cell case (200) in tight contact with the cell case.

8. The pouch-shaped battery cell according to claim 7, wherein the thermal fuse (510) is fixed to an outer surface of a pocket portion of the cell case (200) via an adhesive member (550).

9. The pouch-shaped battery cell according to claim 8, wherein the adhesive member (550) is made of a thermally conductive material.

10. The pouch-shaped battery cell according to claim 1, wherein
the cell case (200) comprises an upper case (210), a lower case (220) located under the upper case (210), and a sealed portion (230) formed at edges of the upper case (210) and the lower case (220), and
the sealed portion (230) is formed at three sides or four sides.

## Patentansprüche

1. Beutelförmige Batteriezelle, umfassend:
eine Elektrodenanordnung (100), welche ein Paar von Elektrodenstreifen (110) aufweist, welche an einer Seite oder entgegengesetzten Seiten der Elektrodenanordnung (100) bereitgestellt sind;
ein Zellengehäuse (200), welches dazu eingerichtet ist, die Elektrodenanordnung (100) aufzunehmen;
ein Paar von Elektrodenleitungen (300), wobei eine Seite von jeder des Paars von Elektrodenleitungen (300) mit einem entsprechenden der Elektrodenstreifen (110) verbunden ist, wobei die andere Seite von jeder des Paars von Elektrodenleitungen (300) von dem Zellengehäuse (200) nach außen vorsteht;
eine Leitungsschicht (400), welche zwischen dem Zellengehäuse (200) und jeder der Elektrodenleitungen (300) angeordnet ist; und
eine Thermosicherungseinheit (500), wobei,
bei einer vorbestimmten Temperatur oder höher, die Thermosicherungseinheit (500) betrieben ist, um ein Auftreten eines Kurzschlusses zu verursachen, **dadurch gekennzeichnet, dass** das Zellengehäuse (200) eine Laminatstruktur aufweist, welche eine äußere Harzlage (211, 221), eine Metalllage (212, 222) und eine innere Harzlage (213, 223) umfasst,
die Thermosicherungseinheit (500) zwei Thermosicherungseinheiten umfasst, wobei jede der Thermosicherungseinheiten (500) eine Thermosicherung (510), welche dazu eingerichtet ist, bei einer vorbestimmten Temperatur oder höher verbunden zu sein, ein erstes Kabel (520), welches sich von einer Seite der Thermosicherung (510) um eine vorbestimmte Länge erstreckt, und ein zweites Kabel (530) umfasst, welches sich von der anderen Seite der Thermosicherung (510) um eine vorbestimmte Länge erstreckt,
eine der Thermosicherungseinheiten (500) dazu eingerichtet ist, einen positiven Elektrodenstreifen und die Metalllage (212, 222) des Zellengehäuses (200) miteinander zu verbinden, und
die andere Thermosicherungseinheit (500) dazu eingerichtet ist, einen negativen Elektrodenstreifen und die Metalllage (212, 222) des Zellengehäuses miteinander zu verbinden.

2. Beutelförmige Batteriezelle nach Anspruch 1, wobei die Thermosicherung (510) in dem Zellengehäuse (200) angeordnet ist.

3. Beutelförmige Batteriezelle nach Anspruch 2, wobei die Thermosicherung (510) in der Nähe jedes der Elektrodenstreifen (110) angeordnet ist.

4. Beutelförmige Batteriezelle nach Anspruch 2, wobei die Thermosicherung (510) mit einer Beschichtungslage (540) abgedeckt ist.

5. Beutelförmige Batteriezelle nach Anspruch 4, wobei die Beschichtungslage (540) aus Silikon hergestellt ist.

6. Beutelförmige Batteriezelle nach Anspruch 1, wobei die Thermosicherung (510) außerhalb des Zellengehäuses (200) angeordnet ist.

7. Beutelförmige Batteriezelle nach Anspruch 6, wobei die Thermosicherung (510) an einer äußeren Fläche des Zellengehäuses (200) in engem Kontakt mit dem Zellengehäuse angeordnet ist.

8. Beutelförmige Batteriezelle nach Anspruch 7, wobei die Thermosicherung (510) an einer äußeren Fläche eines Taschenabschnitts des Zellengehäuses (200) über ein Haftelement (550) fixiert ist.

9. Beutelförmige Batteriezelle nach Anspruch 8, wobei das Haftelement (550) aus einem thermisch leitfähigen Material hergestellt ist.

10. Beutelförmige Batteriezelle nach Anspruch 1, wobei
das Zellengehäuse (200) ein oberes Gehäuse (210), ein unteres Gehäuse (220), welches unter dem oberen Gehäuse (210) angeordnet ist, und einen abgedichteten Abschnitt (230) umfasst, welcher an Rändern des oberen Gehäuses (210) und des unteren Gehäuses (220) gebildet ist, und
wobei der abgedichtete Abschnitt (230) an drei Seiten oder vier Seiten gebildet ist.

## Revendications

1. Élément de batterie en forme de poche comprenant :
un ensemble électrode (100) présentant une paire de pattes d'électrodes (110) disposées sur un côté ou des côtés opposés de l'ensemble électrode (100) ;
un boîtier d'élément (200) configuré pour recevoir l'ensemble électrode (100) ;
une paire de fils d'électrode (300), un côté de chacun de la paire de fils d'électrode (300) étant connecté à l'une correspondante des pattes d'électrode (110), l'autre côté de chacun des fils d'électrode (300) faisant saillie vers l'extérieur du boîtier d'élément (200) ;
un film conducteur (400) situé entre le boîtier d'élément (200) et chacun des fils d'électrode (300) ; et
une unité de fusible thermique (500), dans lequel
à une température prédéterminée ou supérieure, l'unité de fusible thermique (500) est actionnée pour induire l'apparition d'un court-circuit, **caractérisé en ce que** le boîtier d'élément (200) présente une structure stratifiée comprenant une couche de résine externe (211, 221), une couche métallique (212, 222) et une couche de résine interne (213, 223),
l'unité de fusible thermique (500) inclut deux unités de fusible thermique, chacune des unités de fusible thermique (500) comprenant un fusible thermique (510) configuré pour être connecté à une température prédéterminée ou supérieure, un premier câble (520) s'étendant d'un côté du fusible thermique (510) d'une longueur prédéterminée, et un second câble (530) s'étendant de l'autre côté du fusible thermique (510) d'une longueur prédéterminée,
l'une des unités de fusible thermique (500) étant configurée pour connecter entre elles une patte d'électrode positive et la couche métallique (212, 222) du boîtier d'élément (200), et
l'autre unité de fusible thermique (500) étant configurée pour connecter entre elles une patte d'électrode négative et la couche métallique (212, 222) du boîtier d'élément.

2. Élément de batterie en forme de poche selon la revendication 1, dans lequel le fusible thermique (510) est situé dans le boîtier d'élément (200).

3. Élément de batterie en forme de poche selon la revendication 2, dans lequel le fusible thermique (510) est situé à proximité de chacune des pattes d'électrode (110).

4. Élément de batterie en forme de poche selon la revendication 2, dans lequel le fusible thermique (510) est recouvert d'une couche de revêtement (540).

5. Élément de batterie en forme de poche selon la revendication 4, dans lequel la couche de revêtement (540) est en silicone.

6. Élément de batterie en forme de poche selon la revendication 1, dans lequel le fusible thermique (510) est situé à l'extérieur du boîtier d'élément (200).

7. Élément de batterie en forme de poche selon la revendication 6, dans lequel le fusible thermique (510) est situé sur une surface externe du boîtier d'élément (200) en contact étroit avec le boîtier d'élément.

8. Élément de batterie en forme de poche selon la revendication 7, dans lequel le fusible thermique (510) est fixé à une surface externe d'une partie de poche du boîtier d'élément (200) par l'intermédiaire d'un organe adhésif (550).

9. Élément de batterie en forme de poche selon la revendication 8, dans lequel l'organe adhésif (550) est constitué d'un matériau thermoconducteur.

10. Élément de batterie en forme de poche selon la revendication 1, dans lequel
le boîtier d'élément (200) comprend un boîtier supérieur (210), un boîtier inférieur (220) situé sous le boîtier supérieur (210, et une partie scellée (230) formée aux bords du boîtier supérieur (210) et du boîtier inférieur (220), et
la partie scellée (230) est formée sur trois côtés ou quatre côtés.
